# EUROPEAN PATENT SPECIFICATION

(11) **EP 4 110 541 B1**
(45) Date of publication and mention of the grant of the patent: **04.09.2024**
(21) Application number: 20928415.7
(22) Date of filing: 31.03.2020
(51) Int. Cl.: B23B 29/02, F16F 15/023

(54) **A MAGNETORHEOLOGICAL FLUID DAMPER FOR BORING BARS**
MAGNETORHEOLOGISCHER FLUIDDÄMPFER FÜR BOHRSTANGEN
AMORTISSEUR DE FLUIDE MAGNÉTO-RHÉOLOGIQUE POUR BARRES D'ALÉSAGE

(43) Date of publication of application: 04.01.2023
(73) Proprietor: KOC Universitesi, 34450 Istanbul (TR)
(72) Inventor: LAZOGLU, Ismail, 34450 Sariyer/Istanbul (TR); SALEH, Mostafa, 34450 Sariyer/Istanbul (TR)
(74) Representative: Dericioglu, E. Korhan
(86) International application number: PCT/TR2020/050253
(87) International publication number: WO 2021/201787

(56) References cited:
- CN-A- 109 732 543
- CN-U- 206 802 182
- CN-U- 206 802 182
- KR-A- 20140 080 268
- US-A1- 2014 332 331
- US-A1- 2015 375 304
- MEI D ET AL: "Magnetorheological fluid-controlled boring bar for chatter suppression", JOURNAL OF MATERIALS PROCESSING TECHNOLOGY, ELSEVIER, NL, vol. 209, no. 4, 19 February 2009 (2009-02-19), pages 1861 - 1870, XP025876112, ISSN: 0924-0136, [retrieved on 20080426], DOI: 10.1016/J.JMATPROTEC.2008.04.037
- LAWRANCE G ET AL: "Suppression of Tool Vibration in Boring Process: A Review", JOURNAL OF THE INSTITUTION OF ENGINEERS (INDIA): SERIES C, SPRINGER INDIA, INDIA, vol. 100, no. 6, 28 August 2019 (2019-08-28), pages 1053 - 1069, XP036943032, ISSN: 2250-0545, [retrieved on 20190828], DOI: 10.1007/S40032-019-00531-Z
- CARLSON J D ET AL: "MR fluid, foam and elastomer devices", MECHATRONICS, PERGAMON PRESS, OXFORD, GB, vol. 10, no. 4-5, 1 June 2000 (2000-06-01), pages 555 - 569, XP004195796, ISSN: 0957-4158, DOI: 10.1016/S0957-4158(99)00064-1

## Description

### Field of the Invention

The present invention relates to a magnetorheological fluid damper for increasing the stability of boring bars.

### Background of the Invention

Magnetorheological (MR) fluids are a type of smart fluids, the rheological properties of which, like viscosity and yield stress, are controlled by magnetic flux intensity. These properties are field dependent, and completely reversible when the magnetic flux is removed. Magnetic flux is generally controlled by a DC electric current supplied through an electromagnetic coil.

A layer of sponge or foam filled with the MR fluid is wrapped around a bar. This layer is activated by a magnetic flux produced by an electromagnetic coil. Using the sponge or the foam layer as a fluid retainer reduces the required amount of MR fluid and allows design simplicity without the need for tight sealings. Wrapping the foam in the annulus around the bar gives damping in both radial and tangential directions of the cutting.

Boring bars are highly prone to vibration chatter due to their lower stiffness at the tip of the cantilever beam structure. Regenerative chatter in the boring process is hard to determine in advance, as it starts and builds up during the process due to the waves produced by the cutter on the machined surface. There are two types of dampers that can be used to eliminate chatter. These are passive dampers and active dampers.

Passive dampers have a disadvantage of limited bandwidth by which they cannot be successful in damping a wide range of unexpected vibrations such as boring bar chatter.

On the other hand, active damping allows damping of chatter upon its existence. Active systems usually utilize expensive materials such as piezoelectric devices and/or they need high power sources like electrorheological fluid dampers.

The United States patent application numbered US6202806 in the state of the art discloses a damper for resisting movement between two relatively moveable members, including a first member and a second member coupled for relative movement having a working space between them, and a controllable medium retaining structure, for example, an absorbent matrix, to hold a controllable medium only in the working space. Said patent document does not deal with the chattering problem in boring processes.

MEI ("Magnetorheological fluid-controlled boring bar for chatter suppression",JOURNAL OF MATERIALS PROCESSING TECHNOLOGY, ELSEVIER, NL, vol. 209, no. 4, 19 February 2009 (2009-02-19), pages 1861-1870, DOI: 10.1016/J.JMATPROTEC.2008.04.037) discloses a fluid damper for increasing the stability of boring bars.

### Short Description of the Invention

The objective of the invention is to provide a magnetorheological fluid damper for increasing the stability of boring bars.

Another objective of the invention is to provide a boring bar with reduced chatter.

### Detailed Description of the Invention

The fluid damper in order to fulfill the objects of the present invention is illustrated in the attached figures, where:

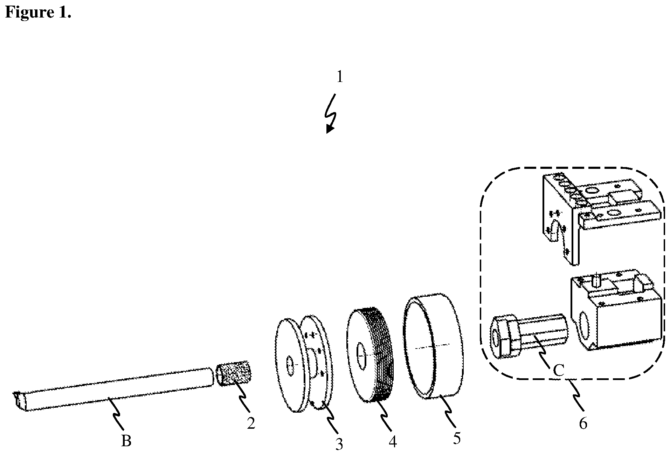

- **Figure 1.**: Is a view of the fluid damper

Elements shown in the figures are individually numbered, and the correspondence of these numbers are given as follows:
**1.** Fluid damper
**2.** Foam layer
**3.** Bobbin
**4.** Electromagnetic coil
**5.** Casing
**6.** Holder

### B. Boring bar

### C. Collet

The fluid damper (1) for increasing the stability of boring bars comprises;
- at least one foam layer (2) filled with magnetorheological fluid, suitable to be wrapped around a boring bar (B),
- at least one bobbin (3) having at least two flanges, each of the flanges having at least one hole for allowing the said boring bar (B) and the foam layer (2) to pass through, the bobbin (3) flanges placed so as to define a space between them,
- at least one electromagnetic coil (4) placed in the space defined by the bobbin (3) flanges, having at least one hole for allowing the boring bar (B) and the foam layer (2) to pass through, the electromagnetic coil (4) being suitable for producing magnetic flux lines passing through the foam layer (2) when energized, thereby changing at least one physical property of the foam layer (2)
- at least one casing (5) for covering the bobbin (3) and the electromagnetic coil (4).

The fluid damper (1) for increasing the stability of boring bars comprises; at least one foam layer (2) filled with magnetorheological fluid, suitable to be wrapped around a boring bar (B).

The flanges of the bobbin (3) are preferably connected to each other via at least one hollow connecting member, thereby forming an H-shape. This improves the robustness of the bobbin (3). The foam layer (2) passes through the bobbin (3) via the hole in the said flanges and the connecting member.

The flanges of the bobbin (3) are preferably placed such that they are parallel to each other and the center of their holes and the hole of the connecting member coincide. The flanges of the bobbin (3) are placed at a distance to each other thereby defining a space between them. The said space allows the electromagnetic coil (4) to be placed between the said flanges.

The electromagnetic coil (4) placed in the space defined by flanges, produces magnetic flux lines passing through the foam layer (2) when energized. The flux lines are preferably parallel to the radial direction of the foam layer (2). When the magnetic flux passes through the foam layer (2), they change at least one physical property of the foam layer (2). The physical property may be viscosity and/or yield stress however the said physical properties are not limited to the said properties. The said physical property could be any rheological property. The amount of change of the physical properties could be adjusted by means of the voltage and/or current supplied to the electromagnetic coil (4). By changing the level and/or frequency and/or duty cycle of the voltage and/or the current supplied to the electromagnetic coil (4), the damping ratio of the fluid damper (1) may be controlled.

The bobbin (3) and the electromagnetic coil (4) are covered by the casing (5).

In an embodiment of the invention, the fluid damper (1) is connectable to a lathe via a holder (6). The holder (6) allows an adjustable length of the boring bar (B) based on operation needs by adjusting screws of a collet (C).

In the preferred mode of operation of the inventive fluid damper (1), energizing the electromagnetic coil (4) produces magnetic flux lines in the foam layer (2). Flux lines are preferably parallel to the radial vibrating motion of the boring bar (B) to be passed through the fluid damper (1). The annular design of the fluid damper (1) gives damping effect in the whole radial direction of the fluid damper (1) which allows damping of vibration in both radial and tangential cutting directions of the boring process. The assembly of the fluid damper to a conventional boring bar (B) tool holder by the holder (6) allows an adjustable length of the boring bar (B) based on operation needs. Using the proposed holder (6) allows attaching the fluid damper (1) to conventional CNC lathe machines without affecting the initial tightening and stiffness of the system.

## Claims

1. A fluid damper (1) for increasing the stability of boring bars **characterized by**;
- at least one foam layer (2) filled with magnetorheological fluid, suitable to be wrapped around a boring bar (B)
- at least one bobbin (3) having at least two flanges, each of the flanges having at least one hole for allowing the said boring bar (B) and the foam layer (2) to pass through, the flanges being connected to each other by a hollow connecting member, the bobbin (3) flanges being placed so as to define a space between them,
- at least one electromagnetic coil (4) placed in the space defined by the bobbin (3) flanges, having at least one hole for allowing the boring bar (B) and the foam layer (2) to pass through, the electromagnetic coil (4) being suitable for producing magnetic flux lines passing through the foam layer (2) when energized, thereby changing at least one physical property of the foam layer (2)
- at least one casing (5) for covering the bobbin (3) and the electromagnetic coil (4).

2. A fluid damper (1) as in Claim 1 **characterized in that** the flux lines produced by the electromagnetic coil (4) are parallel to the radial direction of the foam layer (2).

3. A fluid damper (1) as in Claims 1 or 2 wherein the viscosity and/or yield stress of the foam layer (2) is changeable by the flux lines produced by the electromagnetic coil (4).

4. A boring bar (B) comprising a fluid damper (1) as in any of the Claims 1-3.

## Patentansprüche

1. Ein Fluiddämpfer (1) zur Erhöhung der Stabilität von Bohrstangen, **gekennzeichnet durch;**
- mindestens eine mit magnetorheologischer Flüssigkeit gefüllte Schaumstoffschicht (2), die zum Aufwickeln um eine Bohrstange (B) geeignet ist,
- mindestens einen Spulenkörpers (3) mit mindestens zwei Flanschen, wobei jeder der Flansche mindestens eine Durchgangsöffnung für die Durchführung der Bohrstange (B) und der Schaumstoffschicht (2) aufweist, wobei die Flansche durch ein hohles Verbindungselement miteinander verbunden sind, bei dem die Flansche der Spule (3) so angeordnet sind, dass sie einen Zwischenraum zwischen sich bilden,
- mindestens eine elektromagnetische Spule (4), die in dem von den Flanschen des Spulenkörpers (3) definierten Raum angeordnet ist und mindestens eine Durchgangsöffnung für die den Durchführung der Bohrstange (B) und der Schaumstoffschicht (2) aufweist, wobei die elektromagnetische Spule (4) geeignet ist, magnetische Flusslinien zu erzeugen, die bei Erregung der Schaumstoffschicht (2) durch diese verlaufen, wodurch mindestens eine physikalische Eigenschaft der Schaumstoffschicht (2) verändert wird,
- mindestens ein Gehäuse (5) zum Abdecken des Spulenkörpers (3) und der elektromagnetischen Spule (4).

2. Fluiddämpfer (1) nach Anspruch 1, **dadurch gekennzeichnet, dass** die von der elektromagnetischen Spule (4) erzeugten Flußlinien parallel zur radialen Richtung der Schaumstoffschicht (2) verlaufen.

3. Fluiddämpfer (1) nach Anspruch 1 oder 2, wobei die Viskosität und/oder Fließspannung der Schaumstoffschicht (2) durch die von der elektromagnetischen Spule (4) erzeugten Flusslinien veränderbar ist.

4. Bohrstange (B) umfassend einen Fluiddämpfer (1) nach einem der Ansprüche 1-3.

## Revendications

1. Amortisseur de fluide (1) pour augmenter la stabilité des barres d'alésage **caractérisé par** :
- au moins une couche de mousse (2) remplie de fluide magnétorhéologique, apte à être enroulée autour d'une barre d'alésage (B);
- au moins une bobine (3) ayant au moins deux brides, chacune des brides ayant au moins un trou pour permettre le passage de ladite barre d'alésage (B) et de la couche de mousse (2), les brides étant reliées l'une à l'autre par un élément de liaison creux, les brides de la bobine (3) étant placées de manière à définir un espace entre elles;
- au moins une bobine électromagnétique (4) placée dans l'espace défini par les brides de la bobine (3), comportant au moins un trou permettant le passage de la barre d'alésage (B) et de la couche de mousse (2), la bobine électromagnétique (4) étant apte à produire des lignes de flux magnétiques traversant la couche de mousse (2) lorsqu'elle est alimentée, modifiant ainsi au moins une propriété physique de la couche de mousse (2)
- au moins un boîtier (5) pour recouvrir la bobine (3) et la bobine électromagnétique (4).

2. Amortisseur de fluide (1) selon la revendication 1, **caractérisé par le fait que** les lignes de flux produites par la bobine électromagnétique (4) sont parallèles à la direction radiale de la couche de mousse (2).

3. Amortisseur de fluide (1) selon les revendications 1 ou 2, dans lequel la viscosité et/ou la limite d'élasticité de la couche de mousse (2) peut être modifiées par les lignes de flux produites par la bobine électromagnétique (4).

4. Barre d'alésage (B) comprenant un amortisseur de fluide (1) comme dans l'une des revendications 1-3.
